# EUROPEAN PATENT APPLICATION

(11) **EP 2 944 775 A1**
(43) Date of publication of application: **18.11.2015**
(21) Application number: 14167957.1
(22) Date of filing: 12.05.2014
(51) Int. Cl.: F01D 25/28, B23P 15/00

(54) **Method for assembling a turbine assembly**

(71) Applicant: Siemens Aktiengesellschaft, 80333 München (DE)
(72) Inventor: Batt, Stephen, Lincoln, LN4 2DZ (GB); Bluck, Richard, Welton, Lincoln, LN2 3FQ (GB)
(74) Representative: Maier, Daniel Oliver

(57) **Abstract**

The present invention relates to a method for assembling a turbine assembly (10), comprising at least two aerofoil assemblies (12, 14) connected to each other by at least two interlocking platforms (16, 18), wherein the aerofoil assemblies (12, 14) are brought from a free-state untwisted position to an assembled twisted position during assembling.

In order to provide an easy and quick assembling a twisting moment to achieve the assembled twisted position is applied to the at least two aerofoil assemblies (12, 14) simultaneously resulting in the assembled twisted position of the at least two aerofoil assemblies (12, 14).

## Description

### Field of the Invention

The present invention relates to a method for assembling a turbine assembly. The present invention further relates to an assembling aid to perform the assembly method.

### Background to the Invention

Modern turbine engines often operate at extremely high temperatures. Not only can the effect of temperature on the turbine blades and/or stator vanes (aerofoils) be detrimental to the efficient operation of the turbine engine and can, in extreme circumstances, lead to distortion and possible failure of the blade or vane, but the high temperatures may also cause pressure fluctuations and vibrations in the turbine. Even during occurrence of such working conditions there is the need that turbine parts, like the turbine blades, maintain their integrity and work reliably. Where turbine blades are vulnerable to vibration problems the outer shrouds may be of an interlocked design. In this case it may not be possible to individually install blades into the turbine disc; instead they must be fitted simultaneously.

Previously, this problem has been solved by careful manual insertion of the aerofoils into the production disc and gently tapping with a mallet in a continuous spiral pattern to insert axially. This method uses the production disc to exert a torsional force onto the aerofoils. There is significant risk of damage to either aerofoil or production disc. Also this method is time consuming and limited to small aerofoils which may require only minimal torsional loading which can be applied manually.

Furthermore, it is required to ensure that interlock faces between adjacent aerofoils are in contact during worst tolerance conditions and extremes of turbine engine operation when there may otherwise be a gap present. This is necessary to ensure that the vibrational behaviour of the aerofoils is controlled and there is a damping mechanism present. In order to achieve this contact high temperature turbine blades may include shrouds that are oriented about the blade radial axis with the blade in its free state.

However, depending upon the aerofoil shape, the angle of shroud orientation in the free state may be relatively large. This means that a large twisting force must be applied to the aerofoils, typically increasing the angle of shroud orientation, in the cold build condition when assembled into a production disc connecting several aerofoils. The application of a twisting force during assembly increases the difficulty of having to simultaneously assemble blades into a production disc because the shrouds are interlocked.

It is a first objective of the present invention to provide a method for assembling a turbine assembly with which the above-mentioned shortcomings can be mitigated, and especially a more aerodynamic efficient aerofoil and gas turbine component is facilitated.

It is a second objective of the invention to provide an assembling aid to assemble the turbine assembly easy and quick. A third objective of the invention is to provide an advantageous turbine assembly assembled by the inventive method.

### Summary of the Invention

Accordingly, the present invention provides a method for assembling a turbine assembly, comprising at least two aerofoils connected to each other by at least two interlocking platforms, wherein the aerofoils are brought from a free-state untwisted position to an assembled twisted position during assembling.

It is provided that a twisting moment to achieve the assembled twisted position is applied to the at least two aerofoils simultaneously resulting in the assembled twisted position of the at least two aerofoils.

Due to the inventive method the aerofoil assemblies can be effectively positioned from their free state. Further, assembling time is minimised. Moreover, an equal twisting moment is applied to both aerofoil assemblies providing a homogeneous arrangement or twisting angle of the aerofoil assemblies.

Even if a term like aerofoil, platform, assembling aid, root portion, slave disc, slot, production disc or bushing is used in the singular or in a specific numeral form in the claims and the specification the scope of the patent (application) should not be restricted to the singular or the specific numeral form. It should also lie in the scope of the invention to have more than one or a plurality of the above mentioned structure(s).

A turbine assembly is intended to mean an assembly provided for a turbine engine, like a gas turbine, wherein the assembly possesses at least an aerofoil assembly. Preferably, the turbine assembly has a turbine wheel or a turbine cascade with circumferential arranged aerofoil assemblies. An aerofoil assembly is intended to mean assembly for a turbine assembly that comprises at least an aerofoil, an outer and an inner platform arranged at opponent ends of the aerofoil(s). The aerofoil assemblies of a turbine wheel are connected with one another by a production disc. Therefore, the aerofoil assembly comprises a root portion that is attached via the radially inner platform to the aerofoil. The root portion is inserted into a corresponding slot of the production disc during an assembling of the turbine assembly. Furthermore, the root portion may have a Christmas tree shape.

In this context an interlocking platform is intended to mean a platform of an aerofoil assembly that is connected to another part of the turbine assembly, preferably, an adjacently arranged aerofoil assembly or specifically, a platform of the latter. The connection may be facilitated via a form fit and/or a force fit. During an operation of the turbine engine the fit between adjacent platforms/shrouds is preferably a force fit. This is enabled by rotation of the shroud caused by twisting of the aerofoil during assembly and modified by un-twisting of the aerofoil under centrifugal force/load. In other words, when the gas turbine is running the contact between adjacent platforms/shrouds is reduced due to the impact of the centrifugal force. Thus, by assembling the aerofoils in a twisted configuration it is ensured to have some level of contact remaining when in use. Preferably, a force fit will exist in a non-operational state due to the twisting force required to assemble the aerofoils being reacted at the faces of the interlocking shroud.

A "free state untwisted position" of the aerofoil assemblies is intended to mean an arrangement of the at least two aerofoil assemblies in a unloaded/unstressed position, a free condition, an untwisted position relative to its fully assembled state and/or a position of two aerofoil assemblies in respect towards each other with at least or solely a form fit. In other words, it means a free state or a state of rest, in which the aerofoil is not exposed to any external forces. Hence, in this position a form fit between the aerofoil assemblies may be established. Moreover, an "assembled twisted position" is intended to mean an arrangement of the at least two aerofoil assemblies in respect towards each other that provides a loaded connection (with a force fit and a tight form fit) between the aerofoil assemblies i.e. an external force is applied to the aerofoil to elastically change the shape of the aerofoil and/or that is adjusted prior to the final assembly step of the turbine assembly. In the latter case this position may also be named pre-assembling position.

In use as the rotor is rotating, the aerofoil will strive to move towards an "untwisted position" due to the exposure of the centrifugal forces acting upon it. The effect of the untwisting motion causes the effective span of the interlocking platform/shroud to increase which causes the contact forces between the shrouds to increase and thus maintain a damping effect.

It is provided that the twisting moment to achieve the twisted position is sufficiently applied to allow fitting of the aerofoils.

Further, the twisting moment, a twisting force or torsion can be applied by any method or means feasible for a person skilled in the art. Additionally, alternatively and preferred, it may be also possible that the twisting moment results in torsion of the aerofoil assembly in itself or of parts thereof.

Preferably, a the twisting moment results in an assembled twisted position of the aerofoil assembly in respect to its free state untwisted position with a twist angle of about 0.5° to 10°, preferably about 1° to 3°, and most preferably of about 1°. Hence, the tight connection between the aerofoil assemblies or their interlocking platforms, respectively, can be established in a narrow adjustment range. The values depend on the shape of the aerofoil e. g. the aspect ratio i.e. the length compared to the chord of the aerofoil and its variation. A longer slender aerofoil with a smaller cross section would use a larger angle compared to a shorter aerofoil with a larger cross section.

In a further advantageous embodiment the twisting moment is applied to the aerofoil assemblies via an assembling aid, resulting in a comfortable and easy to actuate procedure. Advantageously, the twisting moment is applied to at least a root portion of the aerofoil assembly. Hence, the twisting force is applied to a robust part of the turbine assembly reducing the risk of damage to the aerofoil assembly.

In an advantageous embodiment the twisting moment is applied to the aerofoil assemblies by rotating at least two slave discs of the assembling aid in respect to each other and/or a first and at least a second slave disc of the assembling aid in respect to each other. This provides a comfortable adjustment of the aerofoil assemblies due to the easy construction and handling of the assembling aid. A direction of the rotation is a circumferential direction of the discs and in addition of the production disc of the turbine assembly.

According to a further realisation of the invention the root portion of the aerofoil assembly is positioned in at least one slot of the assembling aid beforehand of the application of the twisting moment. Thus, the twisting force can be transferred to the aerofoil assemblies effectively and reliably. Preferably, the slot has a shape or contour that corresponds to the shape of the root portion ensuring an even better transfer twisting moment. To ensure a proper operation of the assembling aid it is advantageous when the at least one slot has a clearance relative to the root portion/blade root form in order to allow the blade root to twist without bending the blade root form. Also the slots may be curved in section to reduce the contact stresses when the twisting moment/torque is applied.

A homogenous and smooth adjustment of the position of the aerofoil assemblies can be provided, when the root portion is positioned in at least two corresponding slots of a first slave disc of the assembling aid and at least a second slave disc of the assembling aid beforehand of the application of the twisting moment. By rotating one slave disc in respect to the other slave disc the portion of the aerofoil assembly being positioned in the slot of the rotating slave disc is moved in rotational direction and the aerofoil assembly is tilted in respect to its former position around an axis extending in span wise direction of the aerofoil or in radial direction of the turbine assembly.

Beneficially, the twisting moment is applied to the aerofoil assemblies beforehand of a positioning of the aerofoil assemblies in the production disc of the turbine assembly. Thus, possible damage to the production disc can be avoided.

In a further advantageous embodiment of the invention a torsion force resulting from the twisting moment is relaxed after the positioning of the aerofoil assemblies in the production disc. Advantageously, the aerofoil assemblies remain in their twisted position. Preferably, the relaxing process is done by relaxing at least one of the slave discs or both slave discs. Moreover, the positioning is preferably a pre-positioning or partial positioning of the aerofoil assemblies or their root portions, respectively, in the production disc. To further position the aerofoil assemblies in the production disc, subsequently or after the torsional force is relaxed, the first slave disc is removed. To maintain the twisted position of the aerofoil assemblies, further subsequently or after the removal of the first slave disc, the twisting moment is re-applied to the aerofoil assemblies by the second slave disc. Preferably, beforehand of the re-applying the second slave disc is repositioned and most preferably the second slave disc is moved into the position vacated by the first slave disc. Hence, a portion of the aerofoil assemblies or their root portions, respectively, now vacated by the second slave disc can be positioned in the production disc while maintaining the twisted position via the second slave disc.

In a further realisation of the invention it is provided that the aerofoil assemblies are transferred to a production disc of the turbine assembly in their twisted position simultaneously. This gives an effective method of insertion of the aerofoil assemblies into the production disc, minimising assembly steps, time, costs and risk of damage.

According to a further embodiment of the invention the aerofoil assemblies are positioned in the assembling aid - beforehand of the application of the twisting moment - in such a way, that a section of the aerofoil assembly extending in an axial direction protrudes from the assembling aid. Thus, a working or handling surface or structure for further assembly steps may be provided. In this context, an axial direction of the aerofoil assembly is intended to mean a direction oriented basically perpendicular to the span wise direction of the aerofoil assembly, wherein in the scope of an arrangement of axial direction as "basically perpendicular" to a span wise direction should also lie a divergence of the axial direction in respect to the span wise direction of about 30°. Preferably, the axial direction is arranged perpendicular to the span wise direction.

Enough working or handling surface or structure can be provided when approximately a third of an axial length of the aerofoil assembly protrudes from the assembling aid. In this context an axial length of the aerofoil assembly is an extension of the aerofoil assembly basically in axial direction. The phrase "approximately a third" should be understood as between 25% to 40% of the axial extension of the aerofoil assembly.

Furthermore, after the applying of the twisting moment the protruding section of the aerofoil assembly is inserted into a slot of a production disc of the turbine assembly beforehand of a transfer of the aerofoil assembly to the production disc. Hence an exact alignment of the pre-twisted aerofoil assemblies and then production disc can be obtained. A transfer of the aerofoil assemblies to the production disc is the mounting of the aerofoil assemblies in the disc to complete the assembling of the turbine assembly. Moreover, the transfer is performed in axial direction of the aerofoil assembly.

Preferably, the slots of the first and/or at least second slave disc and the slot of the production disc have the same contour and dimensions, which are matched in respect of their proper operation. As stated above, the at least one slot of the assembling aid/slave disc(s) should advantageously be wider (in circumferential direction of the slave disc) than the slot of the production disc to allow for the blade root being twisted by the slave disc(s). Hence, the aerofoil assemblies are hold in a similar arrangement or method as used in service ensuring that the torsional force is applied to the aerofoil assemblies in a safe manner.

In addition, a width or depth of the slave disc(s) needs to be considered. If the slave discs are effectively thin slices of the production disc or generally are too thin jamming may occur due to that little or no relative movement between the aerofoil root portion and the slave disc can occur without elastically bending the blade root along its longest axis. Advantageously, a width or depth of the slave disc may be 20% to 45% of a width or depth of the production disc.

In a further advantageous embodiment it is provided that an axial depth of a slot of the first and/or at least second slave disc is approximately a third of an axial length of the root portion of the aerofoil assembly. By means of this, enough contact surfaces between the first and/or at least second slave disc and the aerofoil assembly can be provided to ensure an efficient transfer of the rotational movement of the first and/or at least second slave disc to the aerofoil assembly or its root portion, respectively. Concerning the definition of the wording "approximately a third" it should be referred to the definition given above. Consequently, about two thirds of the root portion of the aerofoil assemblies is positioned in the corresponding slots of the two slave discs and the remaining third protrudes from the assembling aid during the twisting motion.

It is further provided, that the interlocking platform is an outer platform of the aerofoil assembly and specifically a shroud. Since the outer platform or shroud, respectively, is the part of the aerofoil assembly that is positioned the farthest away from the portion of the aerofoil assembly that is mounted to the production disc - the root portion - it is the part of the aerofoil assembly, which has the highest risk of mounting tolerances. Hence, by applying the assembling method to the outer platform a reliable turbine assembly can be obtained.

If the aerofoil assembly is a turbine blade the method can beneficially by applied to a part of the turbine engine that is submitted to high stresses and needs a good integrity especially during rotation.

In summary the invention depicts a method of a aerofoil assembly insertion using a fixture whereby the aerofoil assemblies are all supported by the fixture and torsion is mechanically applied to root portions of the aerofoil assemblies prior to the aerofoil assemblies being inserted into the production disc. The fixture is made up from two slimmer slave discs which engage with the root portions. In this condition the outer interlocking platform or the shroud interlock faces of all of the aerofoil assemblies are engaged. The slave discs are rotated relative to each other and the resulting twisting force applied by the slave discs is reacted at the interlock faces. Due to the motion of the slave discs the angle of the root portions are twisted relative to their free state. When the required root angle is achieved and the root portions are aligned with the production disc slots, the fixture and the aerofoil assemblies are moved axially to engage the slots and insert the aerofoil assemblies.

The present invention further relates to an assembling aid embodied in such a way to perform the inventive method.

Hence, the assembling aid for assembling at least a turbine assembly that comprises at least two aerofoil assemblies, connected by at least two interlocking platforms and being brought from free state untwisted position to an assembled twisted position during assembly, comprises at least a twisting means to achieve the assembled twisted position of the at least two aerofoil assemblies by applying a twisting moment to the at least two aerofoil assemblies simultaneously resulting in the assembled twisted position of the at least two aerofoil assemblies.

Due to the inventive matter the aerofoil assemblies can be effectively positioned from their free state. Further, assembling time is minimised. Moreover, an equal twisting moment is applied to both aerofoil assemblies providing a homogeneous arrangement or twisting angle of the aerofoil assemblies.

In a preferred embodiment of the invention the twisting means comprises the at least two slave discs and/or a first and at least a second slave disc that are arranged rotationally moveable towards each other in an operational configuration. This provides a comfortable adjustment of the aerofoil assemblies due to the easy construction and handling of the assembling aid. The discs may be attached to a fixture of the assembling aid for better handling.

In an advantageous realisation of the invention it is provided that each slave disc is an extension basically in radial direction of a tubular bushing. Thus, the slave discs can be easily manipulated via the bushings. Consequently, the fixture and thus the assembling aid comprises the bushings. In this context, the radial direction is a direction oriented basically perpendicular to an axis of the turbine engine in which the aerofoil assembly is mounted or is the span wise direction of the aerofoil assembly. Concerning the understanding of "basically perpendicular" and the span wise direction the definitions given above should be consulted. A space saving construction can be obtained when a first bushing that comprises the first slave disc is arranged coaxially around a second bushing that comprises the second slave disc.

According to a further embodiment of the invention and as stated above, the assembling aid comprises the first slave disc and the at least second slave disc, wherein the slave discs comprise corresponding slots that are embodied in such a way to receive a root portion of an aerofoil assembly and/or wherein an axial depth of the slave disc and/or its slot, respectively, is embodied in such a way to receive approximately a third of an axial depth of a root portion of an aerofoil assembly. By means of this, enough contact surfaces between the slave disc and the aerofoil assembly can be provided to ensure an efficient transfer of the rotational movement of the slave disc to the aerofoil assembly or its root portion, respectively.

The present invention further relates to a turbine assembly preassembled and/or assembled by the inventive method.

The above-described characteristics, features and advantages of this invention and the manner in which they are achieved are clear and clearly understood in connection with the following description of exemplary embodiments which are explained in connection with the drawings.

### Brief Description of the Drawings

The present invention will be described with reference to drawings in which:
- FIG 1:: shows a schematically and sectional view of a gas turbine engine comprising several turbine assemblies assembled according to the inventive method,
- FIG 2:: shows a perspective view of tree aerofoil assemblies of a turbine assembly from FIG 1,
- FIG 3:: shows a top view of two aerofoil assemblies from FIG 2,
- FIG 4:: shows in a perspective view an assembly aid with two slave discs and a production disc from a turbine assembly from FIG 1,
- FIG 5: shows schematically the assembly aid with the slave discs and a production disc from FIG 4 in a top view and root portions of the aerofoil assemblies from FIG 3 in a bottom view as well as schematically steps of the assembling method,
- FIG 6:: shows schematically and in a side view the production disc from FIG 4 and the aerofoil assemblies from FIG 2 positioned in the free state untwisted position in the slave discs from FIG 4 before a twisting moment/torsion is applied,
- FIG 7:: shows schematically the production disc, the slave discs and the aerofoil assemblies from FIG 6 in a perspective side view,
- FIG 8:: shows schematically the production disc, the slave discs and the aerofoil assemblies from FIG 6 in a top view,
- FIG 9:: shows schematically and in a top view the production disc, the slave discs and the aerofoil assemblies from FIG 6 with torsion applied,
- FIG 10:: shows schematically and in a top view the production disc, the slave discs and the aerofoil assemblies, wherein the aerofoil assemblies are positioned in the twisted position in the slave discs and are aligned with the production disc for insertion therein,
- FIG 11:: shows schematically the production disc, the slave discs and the aerofoil assemblies from FIG 10 in a side view,
- FIG 12:: shows schematically and in a side view the production disc, one slave disc and the aerofoil assemblies after removal of the other slave disc,
- FIG 13:: shows schematically and in a side view the production disc, one slave disc and the aerofoil assemblies after further insertion of the aerofoil assemblies in the production disc,
- FIG 14:: shows schematically and in a side view the production disc and the aerofoil assemblies after removal of the last slave disc,
- FIG 15:: shows schematically and in a side view the aerofoil assemblies assembled in the production disc in the assembled twisted position,
- FIG 16:: shows schematically the aerofoil assemblies from FIG 15 in a top view and
- FIG 17:: shows schematically the production disc and the aerofoil assemblies from FIG 16 with the slave discs arranged for demonstrational purpose in a sectional view along line XVII-XVII of FIG 16.

### Detailed Description of the Illustrated Embodiments

In the present description, reference will only be made to a blade, for the sake of simplicity, but it is to be understood that the invention is applicable to both blades and vanes of a turbine engine 46. The terms upstream and downstream refer to the flow direction of the airflow and/or working gas flow through the engine 46 unless otherwise stated. If used and not otherwise stated, the terms axial, radial and circumferential are made with reference to a rotational axis 56 of the engine 46.

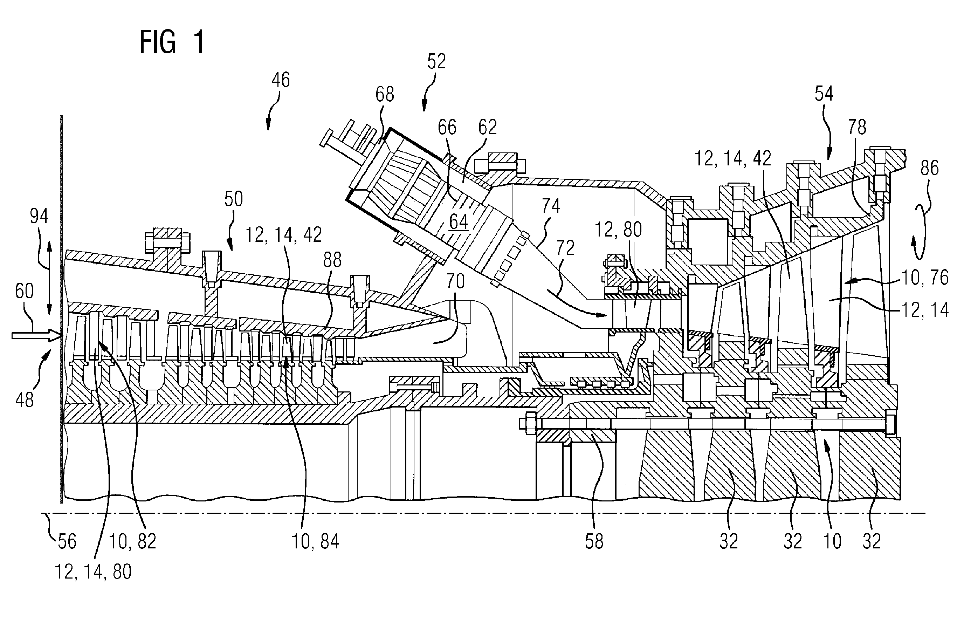

FIG 1 shows an example of a gas turbine engine 46 in a sectional view. The gas turbine engine 46 comprises, in flow series, an inlet 48, a compressor section 50, a combustion section 52 and a turbine section 54, which are generally arranged in flow series and generally in the direction of a longitudinal or rotational axis 56. The gas turbine engine 46 further comprises a shaft 58 which is rotatable about the rotational axis 56 and which extends longitudinally through the gas turbine engine 46. The shaft 58 drivingly connects the turbine section 54 to the compressor section 50.

In operation of the gas turbine engine 46, air 60, which is taken in through the air inlet 48 is compressed by the compressor section 50 and delivered to the combustion section or burner section 52. The burner section 52 comprises a burner plenum 62, one or more combustion chambers 64 defined by a double wall can 66 (not shown in detail) and at least one burner 68 fixed to each combustion chamber 64. The combustion chamber(s) 64 and the burner(s) 68 are located inside the burner plenum 62. The compressed air passing through the compressor section 50 enters a diffuser 70 and is discharged from the diffuser 70 into the burner plenum 62 from where a portion of the air enters the burner 68 and is mixed with a gaseous or liquid fuel. The air/fuel mixture is then burned and the combustion gas 72 or working gas from the combustion is channelled via a transition duct 74 to the turbine section 54.

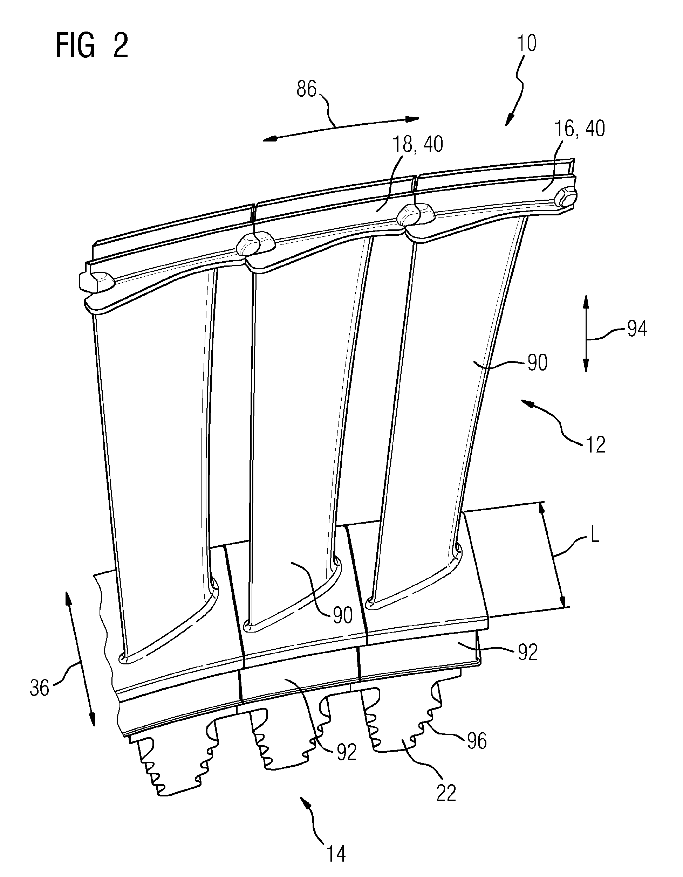

The turbine section 54 comprises a number of blade carrying production discs 32 or turbine wheels attached to the shaft 58. In the present example, the turbine section 54 comprises four discs 32 each carry an annular array of turbine assemblies 12, 14 which each comprises an aerofoil 90 (see FIG 2) embodied as a turbine blade 42. However, the number of blade carrying production discs 32 could be different, i.e. only one production disc 32 or more than four production discs 32. In addition, turbine assemblies 10 embodied as turbine cascades 76 are disposed between the turbine blades 42. Each turbine cascade 76 carries an annular array of aerofoil assemblies 12, 14 which each comprises an aerofoil 90 in the form of guiding vanes, which are fixed to a stator 78 of the gas turbine engine 46. Between the exit of the combustion chamber 64 and the leading turbine blades inlet guiding vanes or nozzle guide vanes 80 are provided.

The combustion gas 72 from the combustion chamber 64 enters the turbine section 54 and drives the turbine blades 42 which in turn rotate the shaft 58. The guiding vanes 80 serve to optimise the angle of the combustion or working gas 72 on to the turbine blades 42. The compressor section 50 comprises an axial series of guide vane stages 82 and rotor blade stages 84 with turbine assemblies 10 comprising aerofoil assemblies 12, 14 or turbine blades 42 or vanes 80, respectively. In circumferential direction 86 around the turbine assemblies 10 the turbine engine 46 comprises a stationary casing 88.

FIG 2 shows in a perspective view a part of a turbine assembly 10 of the gas turbine engine 46 with three exemplarily shown aerofoil assemblies 12, 14 arranged in circumferential direction 86 one after the other (only two aerofoil assemblies are marked with reference numerals). Each aerofoil assembly 12, 14 comprises an aerofoil 90 with an inner platform 92 and an outer interlocking platform 16, 18 or a shroud 40, respectively, at its opposed ends. Moreover, in radial direction 94 at an inner end of the inner platform 92 each aerofoil assembly 12, 14 comprises a root portion 22 with a Christmas tree contour 96.

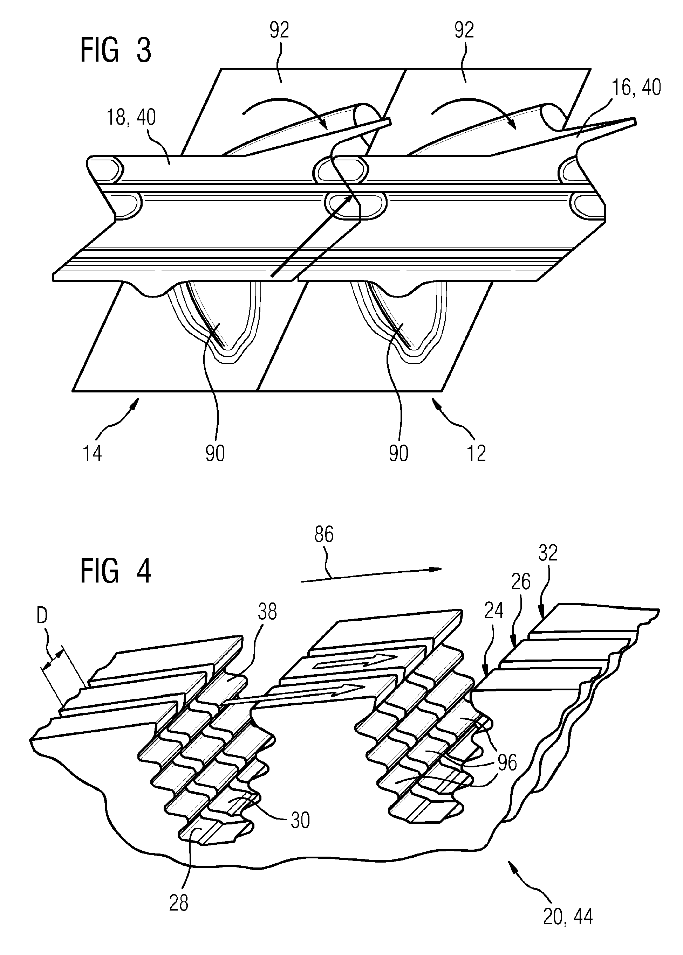

In FIG 3 the aerofoil assemblies 12, 14 are shown in a top view in an assembled twisted position where the aerofoil assemblies 12, 14 are connected to each other by the interlocking platforms 16, 18 which engage tightly in a close form fit (see straight arrow). To achieve this position the aerofoil assemblies 12, 14 had to be twisted during their assembling as it is depicted by the half circular arrows.

For the assembling of the turbine assembly 10 or the aerofoil assemblies 12, 14 in the production disc 32 an assembling aid 20 is used. The assembling aid 20 and the production disc 32 prior to the assembling are shown in FIG 4 (Dimensions are not shown exactly. The arrows indicate the difference in the possible amount of rotation of the first and second slave disc 24, 26 in circumferential direction 86 during assembly). The assembling aid 22 is constructed as a twisting means 44 and comprises a first slave disc 24 and a second slave disc 26, which have in circumferential direction 86 several slots 28, 30 (for each slave disc 24, 26 only one slot 28, 30 is marked with a reference numeral). The slots 28, 30 comprise a Christmas tree contour 96 embodied correspondingly to the contour 96 of the root portion 22 of the aerofoil assemblies 12, 14. The slave discs 24, 26 are embodied equally. Further, also the production disc 32 has several in circumferential direction 86 arranged slots 38 with a Christmas tree contour 96.

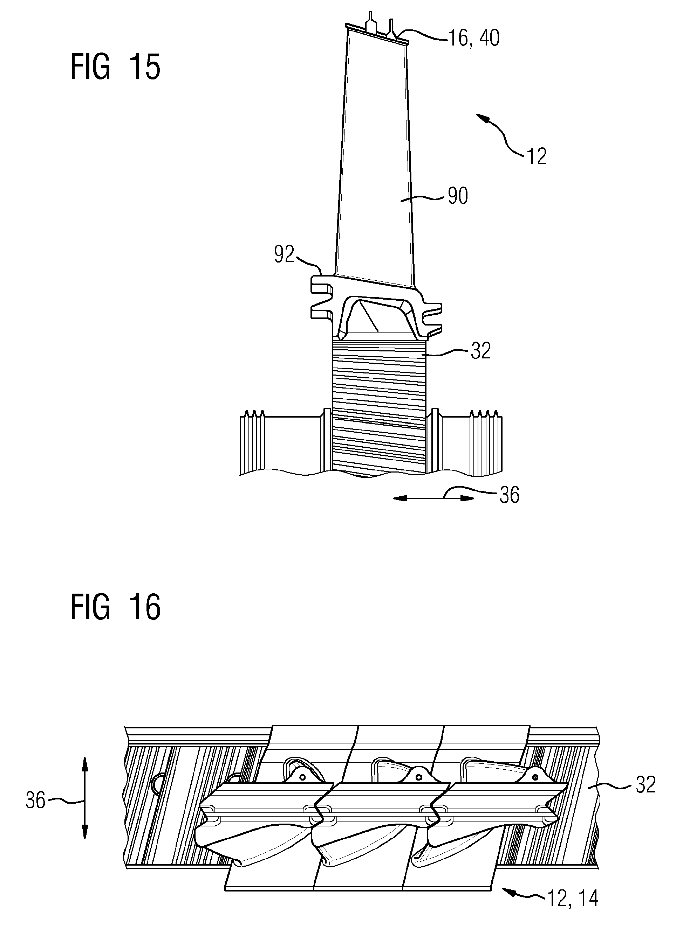

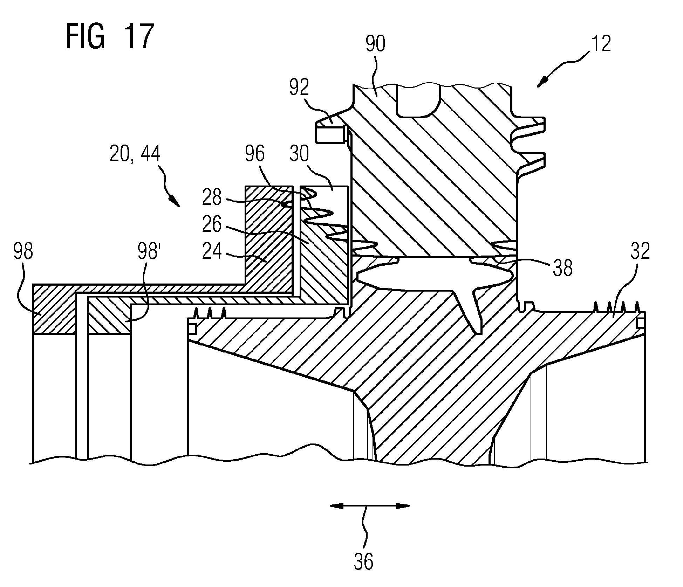

As could be seen in FIG 17 that shows in a sectional view along line XVII-XVII of FIG 16 the aerofoil assemblies 12, 14 and the production disc 32 in their assembled state and the slave discs 24, 26 arranged for demonstrational purpose in their position beforehand of the assembling. Each slave disc 24, 26 is arranged at or a part of a tubular bushing 98, 98', wherein a first bushing 98 comprising the first slave disc 24 and a second bushing 98' the second slave disc 26. Both slave discs 24, 26 are extensions of the respective bushings 98, 98' and extend basically in radial direction 94 of the bushing 98, 98'. Furthermore, the first bushing 98 is arranged coaxially around the second bushing 98'. The slots 28, 30 of the slave discs 24, 26 shown in FIG 17 are not circumferentially aligned. Further, a direction of the depth D of the slots 28, 30 is oriented slightly offset to the axial direction 36, what is depicted by the inhomogeneous cutting of the Christmas tree contour 96. For simplicity of the following FIG the slave discs 24, 26 are partly shown without the bushings 98, 98'.

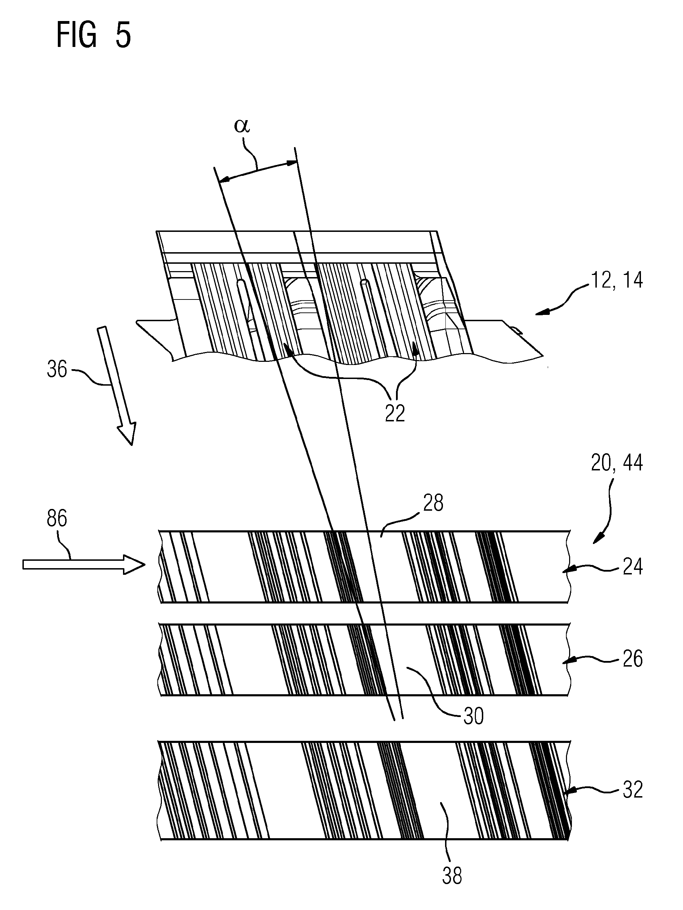

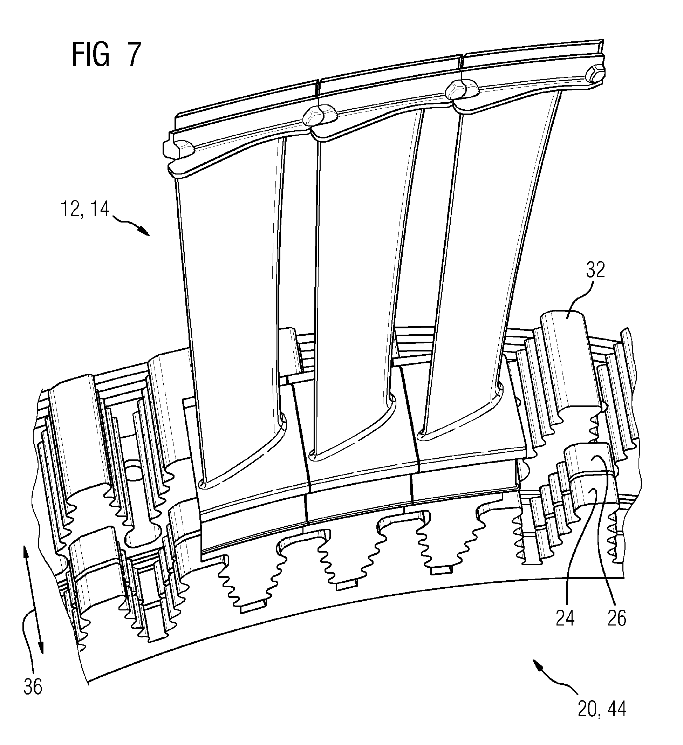

An assembling method will be described in the following text with reference to FIG 5 to 16.

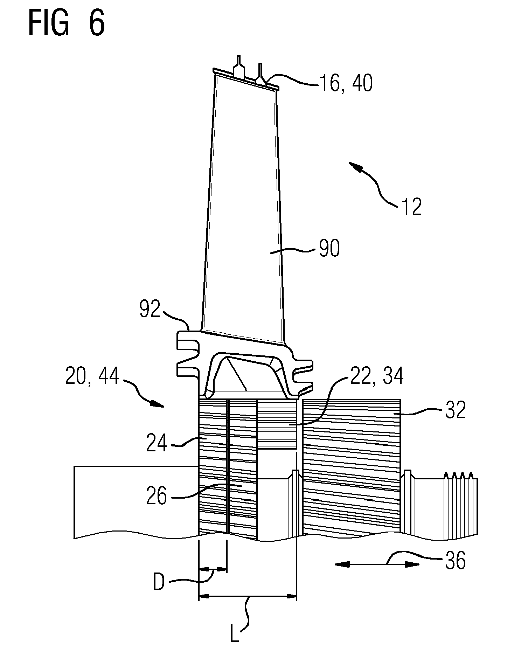

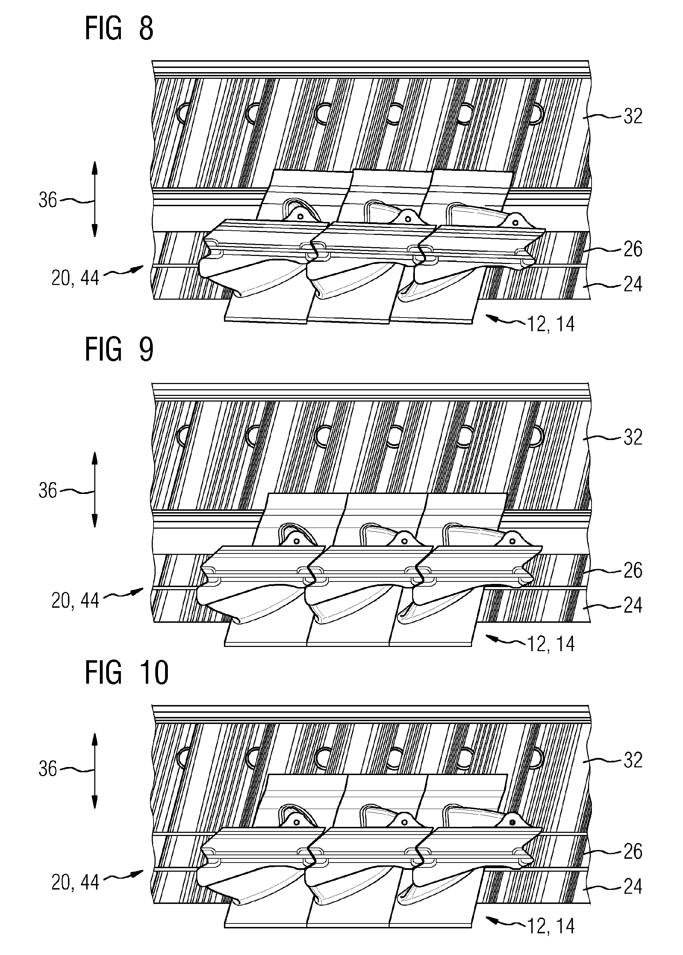

FIG 5 shows the production disc 32 with its slots 38, the two slave discs 24, 26 with their respective slots 28, 30 in an aligned position towards each other and the aerofoil assemblies 12, 14 from beneath showing their root portions 22. The root portions 22 are inserted in axial direction 36 into the slots 28, 30 of the slave discs 24, 26 of the assembling aid 20 and are positioned in the slave discs 24, 26 in the free state (see FIG 6 to 8). The slave discs 24, 26 are rotated relative to each other in order to accept the root portions 22 at an angle different to the fully assembled angle α (details see below). This could be seen in FIG 10 (note the slight off-set of the slot contours of the slot of slave disc 24 compared to the slot of slave disc 26 of FIG 8, especially in comparison with the slot alignment shown in FIG 10).

An axial depth D of the slave discs 24, 26 (see FIG 4 and 6) is selected in such a way to receive approximately a third of an axial length L (see FIG 2 and 6) of the root portion 22 of the aerofoil assembly 12, 14. Moreover, the aerofoil assemblies 12, 14 are positioned in the assembling aid 20 in such a way, that a section 34 of the aerofoil assembly 12, 14 or its root portion 22, respectively, that extends in axial direction 36 protrudes from the assembling aid 20 or in other words, approximately a third of an axial length L of the aerofoil assembly 12, 14 protrudes from the assembling aid 20 or the two slave discs 24, 26 (see FIG 6).

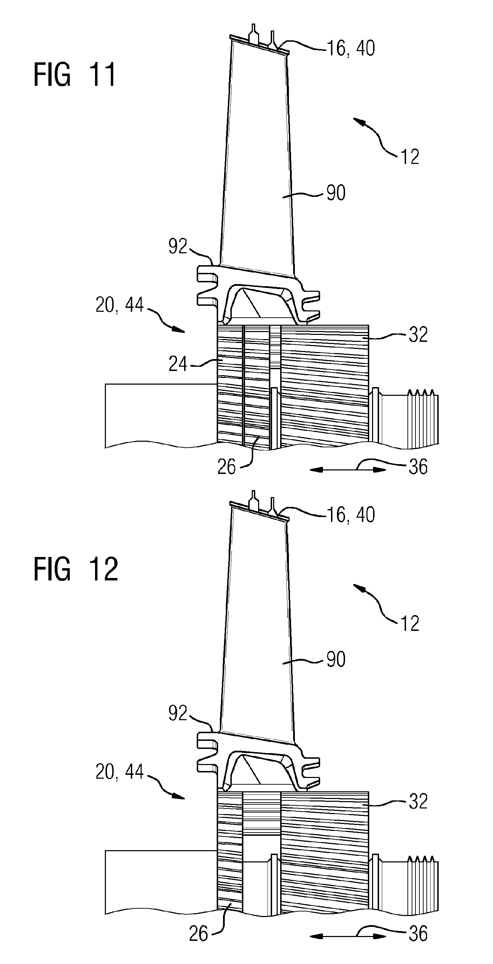

The slave discs 24, 26 are arranged rotationally moveable towards each other in an operational configuration. Thus, when the outer slave disc 24 is rotated in circumferential direction 86 (see FIG 5) the aerofoil assemblies 12, 14 are brought from their free state untwisted position to the assembled twisted position. Due to the positioning of the root portions 22 in the slots 28, 30 of the slave discs 24,26 a twisting moment to achieve the assembled twisted position is applied to the aerofoil assemblies 12, 14 simultaneously resulting in the twisted position of the aerofoil assemblies 12, 14. This could be seen in FIG 10 and 11.

The aerofoil assemblies 12, 14 are twisted such that the root portions 22 are at the correct assembled angle relative to a turbine engine centreline. In other words, torsion is applied to orient the root portion 22 to match the slot 38 of the production disc 32. Generally, the slot 38 in the production disc 32 would always have an angle relative to the turbine engine centreline. The twist angle α is an addition, a portion of that angle (not shown in detail). The adjustment of the correct angel is done by the torque acting on the slave discs 24, 26 and rotating them relative to each other (see FIG 9). The twisting moment results in an assembled twisted position of the aerofoil assembly 12, 14 in respect to its free state untwisted position with a twist angle α of about 0.5° to 10°, preferably about 1° to 3°, and most preferably of about 1° (see FIG 5). The torque results also in an angle of twist of the root portion 22 relative to a tip of the aerofoil assembly 12, 14. Every aerofoil assembly 12, 14 typically has the same angle of twist imparted.

After the applying of the twisting moment the aerofoil assemblies 12, 14, the slave disc 24 and the slave disc 26 are aligned to the slots 38 of the production disc 32 and the protruding section 34 of the aerofoil assemblies 12, 14 is inserted into the slots 38 of the production disc 32. This is shown in FIG 10 and 11. To achieve this the slave discs 24, 26 and the turbine assemblies 12, 14 are moved helically at an angle matching the root portions 22, such that the protruding section 34 or approximately one third of the axial length L of the root portion 22 is engaged into the slots 38 of the production disc 32.

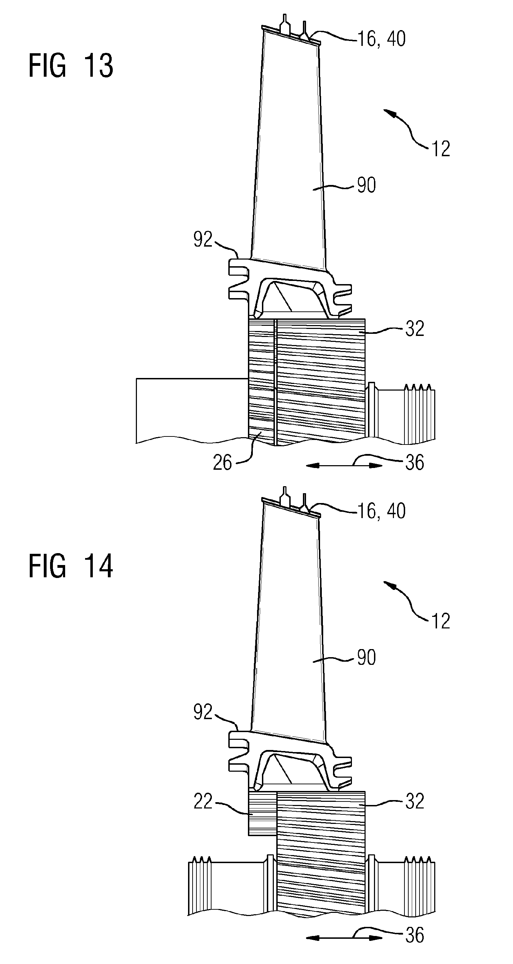

After insertion of the root portions 22 into the production disc 32, the torsion force resulting from the twisting moment from slave disc 24 and slave disc 26 is relaxed and the first or outer slave disc 24 is removed. The second or inner slave disc 26 is now moved into the position vacated by the first slave disc 24 and torsion or the twisting moment is re-applied. This is shown in FIG 12. Due to the removal of the first slave disc 24 and the repositioning of the second slave disc 26 a portion of the root portion 22 is vacated. Thus, the aerofoil assemblies 12, 14 and the second slave disc 26 are moved so that the root portion 22 can now be further inserted into the slots 38 of the production disc 32. This is depicted in FIG 13. Subsequently, the torsion force resulting from the twisting moment from slave disc 26 is relaxed and the second slave disc 26 can be removed. Because of the removal of the second slave disc 26 a portion of the root portion 22 is vacated, that can be seen in FIG 14.

At this point the aerofoil assemblies 12, 14 are constrained in the twisted condition by engagement into the production disc 32. Full engagement is then achieved by applying a simultaneous force to all turbine assemblies 12, 14 in axial direction 36 or in the direction of the root portion 22 or the slots 38 of the production disc 32 or in other words by pressing the aerofoil assemblies into position using a helical motion or along a path to match the slot 38 of the production disc 32. This fully assembled position is shown in FIG 15 and 16.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Although the invention is illustrated and described in detail by the preferred embodiments, the invention is not limited by the examples disclosed, and other variations can be derived therefrom by a person skilled in the art without departing from the scope of the invention.

## Claims

1. A method for assembling a turbine assembly (10), comprising at least two aerofoil assemblies (12, 14) connected to each other by at least two interlocking platforms (16, 18), wherein the aerofoil assemblies (12, 14) are brought from a free-state untwisted position to an assembled twisted position during assembling, **characterised in that**
a twisting moment to achieve the assembled twisted position is applied to the at least two aerofoil assemblies (12, 14) simultaneously resulting in the assembled twisted position of the at least two aerofoil assemblies (12, 14).

2. A method according to claim 1, wherein the twisting moment results in an assembled twisted position of the aerofoil assembly (12, 14) in respect to its free state untwisted position with a twist angle (α) of about 0.5° to 10°, preferably about 1° to 3°, and most preferably of about 1°.

3. A method according to claim 1 or 2, wherein the twisting moment is applied to the aerofoil assemblies (12, 14) via an assembling aid (20), especially the twisting moment is applied to at least a root portion (22) of the aerofoil assembly (12, 14).

4. A method according to claim 3, wherein the twisting moment is applied to the aerofoil assemblies (12, 14) by rotating a first slave disc (24) of the assembling aid (20) and at least a second slave disc (26) of the assembling aid (20) in respect to each other.

5. A method according to claim 3 or 4, wherein the root portion (22) of the aerofoil assembly (12, 14) is positioned in at least one slot (28, 30) of the assembling aid (20) beforehand of the application of the twisting moment and/or the root portion (22) is positioned in at least two corresponding slots (28, 30) of a first slave disc (24) of the assembling aid (20) and at least a second slave disc (26) of the assembling aid (20) beforehand of the application of the twisting moment.

6. A method according to any preceding claim, wherein the twisting moment is applied to the aerofoil assemblies (12, 14) beforehand of a positioning of the aerofoil assemblies (12, 14) in a production disc (32) of the turbine assembly (10).

7. A method according to claims 3, 4 and 6, wherein a torsion force resulting from the twisting moment is relaxed after the positioning of the aerofoil assemblies (12, 14) in the production disc (32) and wherein subsequently, the first slave disc (24) is removed and wherein further subsequently, the twisting moment is re-applied to the aerofoil assemblies (12, 14) by the second slave disc (26).

8. A method according to any preceding claim, wherein the aerofoil assemblies (12, 14) are transferred to a production disc (32) of the turbine assembly (10) in their twisted position simultaneously.

9. A method at least according to claim 3, wherein the aerofoil assemblies (12, 14) are positioned in the assembling aid (20) in such a way, that a section (34) of the aerofoil assembly (12, 14) extending in an axial direction (36) protrudes from the assembling aid (20) and/or that approximately a third of an axial length (L) of the aerofoil assembly (12, 14) protrudes from the assembling aid (20).

10. A method according to claim 9, wherein after the applying of the twisting moment the protruding section (34) of the aerofoil assembly (12, 14) is inserted into a slot (38) of a production disc (32) of the turbine assembly (10) beforehand of a transfer of the aerofoil assembly (12, 14) to the production disc (32).

11. A method at least according to claim 3, wherein an axial depth (D) of a slot (28, 30) of the first and/or at least second slave disc (24, 26) is approximately a third of an axial length (L) of the root portion (22) of the aerofoil assembly (12, 14).

12. A method according to any preceding claim, the interlocking platform (16, 18) is an outer platform of the aerofoil assembly (12, 14) and specifically a shroud (40) and/or wherein the aerofoil assembly (12, 14) is a turbine blade (42).

13. An assembling aid (20) embodied in such a way to perform the method according to any one of claims 3 to 12.

14. An assembling aid according to claim 13, **characterised by** a twisting means (44), which comprises a first slave disc (24) and at least a second slave disc (26) that are arranged rotationally moveable towards each other in an operational configuration and/or wherein each slave disc (24, 26) is an extension basically in radial direction (94) of a tubular bushing (98, 98') and/or wherein a first bushing (98) comprising the first slave disc (24) is arranged coaxially around a second bushing (98') comprising the second slave disc (26).

15. An assembling aid according to claim 13 or 14, **characterised by** a first slave disc (24) and an at least second slave disc (26), wherein the slave discs (24, 26) comprise corresponding slots (28, 30) that are embodied in such a way to receive a root portion (22) of an aerofoil assembly (12, 14) and/or wherein an axial depth (D) of the slave disc (24, 26) is embodied in such a way to receive approximately a third of an axial length (L) of a root portion (22) of an aerofoil assembly (12, 14).
